# EUROPÄISCHE PATENTSCHRIFT

(11) **EP 0 610 266 B1**
(45) Veröffentlichungstag und Bekanntmachung des Hinweises auf die Patenterteilung: **22.01.1997**
(21) Anmeldenummer: 92921325.4
(22) Anmeldetag: 16.10.1992
(51) Int. Cl.: F16M 7/00

(54) **EINLEGETEIL FÜR BETONFUNDAMENT**
EMBEDDED UNIT IN A CONCRETE FOUNDATION
PIECE D'INSERTION POUR PLAQUE DE FONDATION EN BETON

(30) Priorität: 26.10.1991 DE 4135370
(43) Veröffentlichungstag der Anmeldung: 17.08.1994
(73) Patentinhaber: MTU MOTOREN- UND TURBINEN-UNION FRIEDRICHSHAFEN GMBH, D-88040 Friedrichshafen (DE)
(72) Erfinder: MORS, Helmut, D-7990 Friedrichshafen (DE); MÜLLER, Stefan, D-7990 Friedrichshafen 1 (DE); KRAMMER, Adolf, D-7778 Markdorf (DE)
(86) Internationale Anmeldenummer: DE9200871
(87) Internationale Veröffentlichungsnummer: WO9308425

(56) Entgegenhaltungen:
- CH-A- 419 738
- DE-A- 3 345 506
- FR-A- 756 461
- FR-A- 2 371 610
- US-A- 3 477 668

## Beschreibung

Die Erfindung betrifft eine in ein Betonfundament als Einlegeteil eingegossene Auflager-und Befestigungsvorrichtung für ein elastisches Lagerelement einer Maschine.

Zur Schraubverbindung des Lagerelementes mit dem Fundament sind in dem Fundament verankerte Dübel, in das Fundament eingegossene, mit Gewindebohrungen versehene Vollkörper oder auch mit Beton ausgegossene, mit Gewindebohrungen versehene Stahl-Schweißkonstruktionen bekannt.

Diese bekannten Befestigungsmöglichkeiten gewährleisten zwar die mechanische Verbindung mit dem Fundament. Für den Abbau der Amplituden der Maschinenschwingungen leisten sie jedoch nur einen sehr geringen Beitrag. Die am Ausgang des elastischen Lagerelements vorhanden Schwingungsamplituden werden dadurch nahezu ungemindert ins Fundament eingeleitet.

Eine Stahlkonstruktion für ein Fundament geht beispielsweise aus der US-A 3,477,668 als bekannt hervor. Die Stahlkonstruktion wird von einem rechteckigen Rahmen aus Stahlträgern gebildet und zwischen dem Rahmen in Längs- und Querrichtung verlaufenden Schienen und Stäben aus Stahl. Der Rahmen ist mit Beton ausgegossen. Die in Längs- und Querrichtung verlaufenden Schienen und Stäben sind im Beton eingegossen und bilden so ein mit Stahl verstärktes Betonfundament. Die unmittelbaren Auflagerbereiche für eine Maschine bilden mit Beton ausgegossene weitere Rahmenelemente, die auf den längsverlaufenden Stahlschienen des Rahmens aufgesetzt sind. Als Befestigungselemente dienen Befestigungsstifte, die als Einlegeteile in den Beton eingegossen sind. Wie weiter oben erläutert, leiten diese mit dem Rahmen verbundenen Befestigungsstifte und Rahmenelemente Schwingungsamplituden ungemindert in das Fundament ein.

Aufgabe der Erfindung ist es, das Einlegeteil sicher im Fundament zu verankern und es mit einer wirkungsvollen Dämpfung zu versehen, damit schon bei der Einleitung der Schwingungen in das Fundament ihre Amplituden weiter abgebaut und auch Resonanzüberhöhungen wirkungsvoll verringert werden. Dabei soll hochfrequenten Schwingungen durch eine große Masse des Einlegeteils Eingangsimpedanz (Schwingwiderstand) entgegengesetzt werden.

Diese Aufgabe wird durch die Merkmale des ersten Anspruches gelöst.

Das Einlegeteil weist damit eine stark zerklüftete Struktur mit gegenüber einem Vollkörper vergrößerter Oberfläche auf. Damit ist eine wesentlich verbesserte Verankerung im Fundament möglich.

Die beim Eingießen mit Beton ausgefüllten Fugen der Struktur bilden Dämpfungsfugen, die für eine wirkungsvolle Dämpfung der Schwingung schon bei der Einleitung in das Fundament sorgen. Die Masse des Einlegeteiles und damit seine Impedanz gegenüber hochfrequenten Schwingungen kann genügend groß ausgebildet werden.

Mit den weiteren Ansprüchen werden verschiedene Ausgestaltungsmöglichkeiten des Erfindungsgegenstandes angegeben.

Ausführungsbeispiele von erfindungsgemäßen Einlegeteilen sind in den Zeichnungen dargestellt und werden im folgenden näher beschrieben. Es zeigen:
- Fig. 1: eine Perspektivdarstellung eines Einlegeteiles mit einem aus Stäben und Blechen gebildeten Rost;
- Fig. 2: eine Detailperspektivdarstellung gesehen in Richtung II unter Fig. 1;
- Fig. 3: einen Längsschnitt entsprechend der Linie III-III der Fig. 1;
- Fig. 4: einen Querschnitt durch ein Einlegeteil der Fig. 1 bis Fig. 3 entsprechend der Linie IV-IV in Fig. 3;
- Fig. 5: einen Längsschnitt einer weiteren Ausführung eines Einlegeteils, bei dem die Stäbe formschlüssig mit Blechen verbunden sind;
- Fig. 6: einen Querschnitt durch ein Einlegeteil der Fig. 5 entsprechend der Linie VI-VI in Fig. 5.

In allen Zeichnungen ist das Betonmaterial des Fundamentes mit 11 bezeichnet. Es sei dahingestellt, ob es sich um ein Grund fundament oder um ein Zwischenfundament für eine doppelt elastische Lagerung einer Maschine handelt. Ferner sind alle Arten von Beton zum Eingießen der Einlegeteile verwendbar, also neben dem hydraulischen Beton auch Reaktionsharzbeton, wie er für die Dämpfung von Schwingungen z. B. im Werkzeugmaschinenbau Verwendung findet. Für die Lagerung einer Maschine ist eine Vielzahl von Einlegeteilen mit elastischen Lagerelementen notwendig.

Das Einlegeteil besteht erfindungsgemäß aus einer Vielzahl von Stäben 12 und Blechen 13, die unter Bildung von zwischen den einzelnen Oberflächen angeordneten Dämpfungsfugen 14, in welche beim Ausgießen das Betonmaterial 11 eindringt, miteinander verbunden sind. Gewindebohrungen 15 dienen zum Befestigen des nicht dargestellten elastischen Elementes, mit dem die Maschine auf dem Fundament gelagert und befestigt ist.

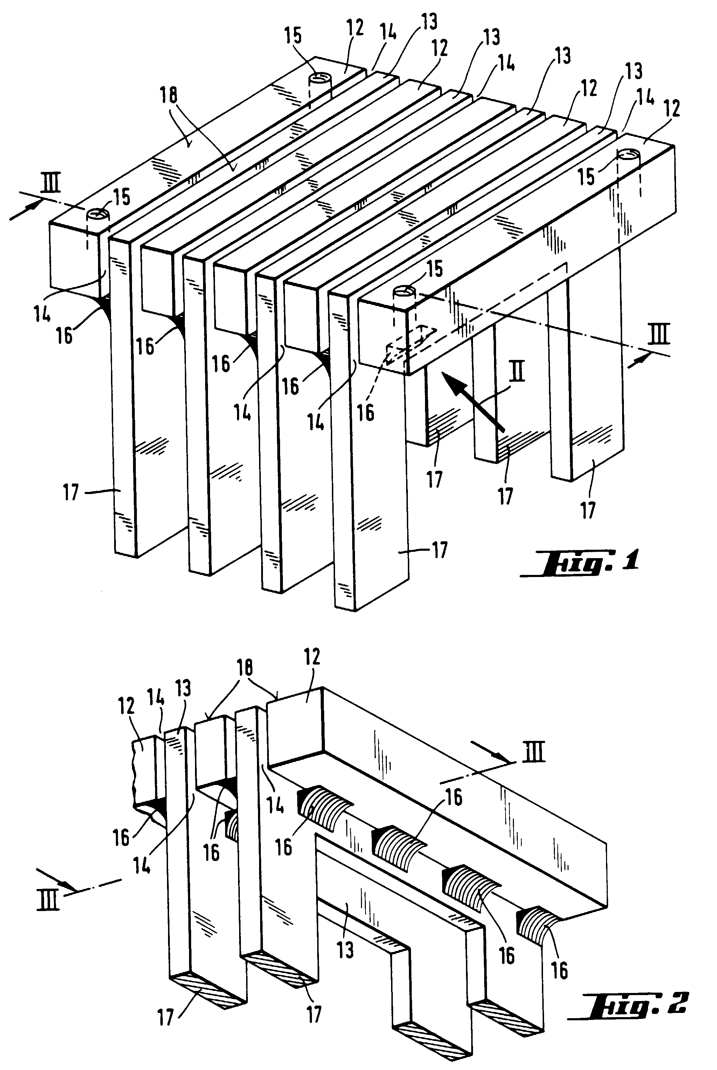

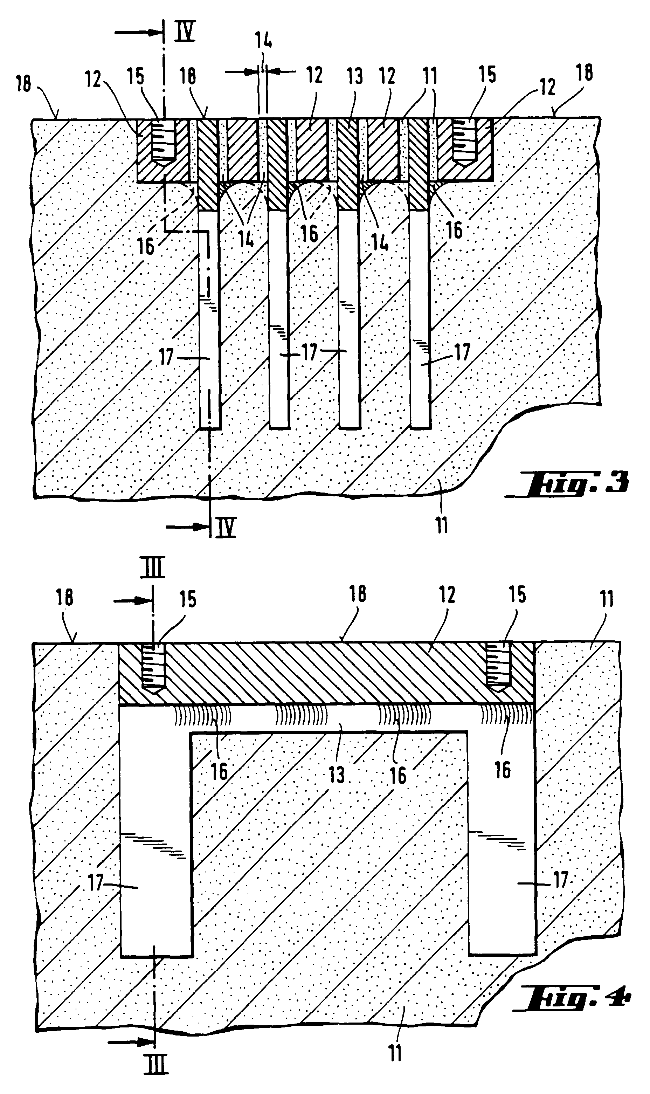

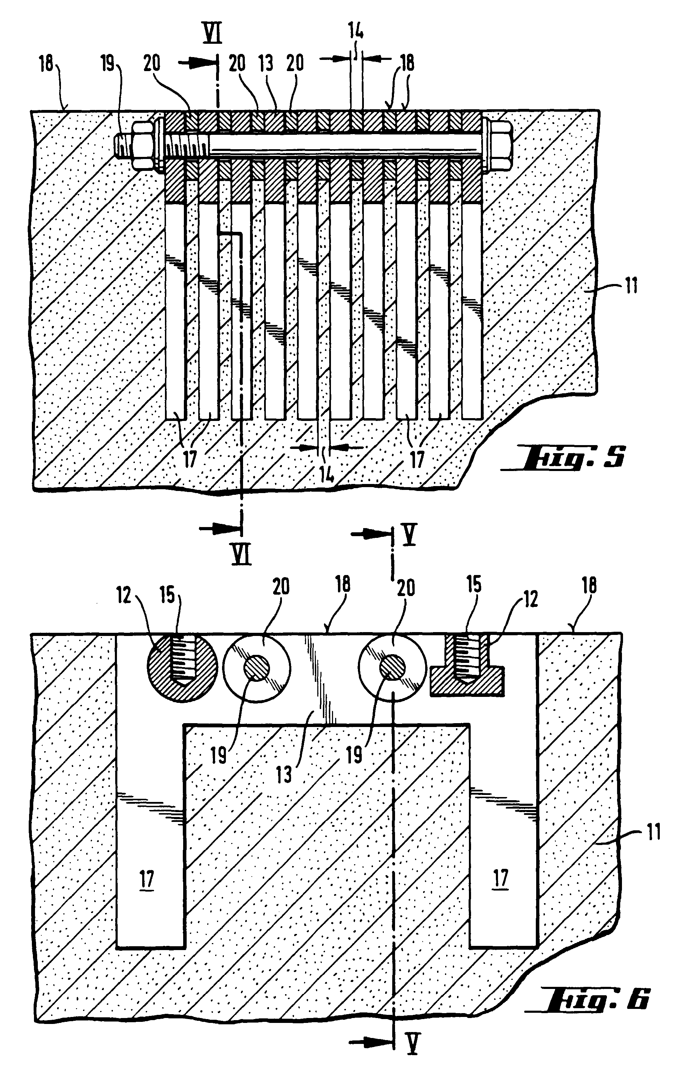

In Fig. 1 bis Fig. 4 besteht das Einlegeteil aus einem Rost aus einzelnen, die Gewindebohrungen 15 aufweisenden Stäben 12. Zwischen den Stäben 12 sind Bleche 13 angeordnet, deren Stirnkanten mit den Oberflächen der Stäbe und der Oberfläche des Fundamentes in einer Ebene 18 liegen. Die Bleche 13 sind U-förmig ausgebildet, wobei ihre Schenkel 17 in das Betonmaterial 11 hineinragen. Die Stäbe 12 und Bleche 13 sind unter Bildung von Dämpfungsfugen 14 durch unterbrochene Schweißnähte 16 miteinander verbunden.

In Fig. 5 und Fig. 6 sind die Stäbe 12 quer zu einer Vielzahl von in das Betonmaterial 11 ragenden Blechen 13 angeordnet und formschlüssig mit ihnen verbunden, wobei die dem Lagerelement zugeordneten Oberflächen der Stäbe und die Stirnkanten der Bleche mit der Oberfläche des Betonfundamentes in einer Ebene 18 liegen. Die Bleche werden durch Schraubenbolzen 19 zusammengespannt. Die Dämpfungsfugen 14 werden durch die Einlage von Distanzscheiben 20 gebildet.

## Patentansprüche

1. In ein Betonfundament als Einlegeteil eingegossene Auflager- und Befestigungsvorrichtung für ein elastisches Lagerelement einer Maschine, dadurch gekennzeichnet, daß das Einlegeteil aus einer Vielzahl von nebeneinanderliegenden, parallel zur Oberfläche des Betonfundaments ausgerichteten, zueinander beabstandeten Stäben (12) und Blechen (13) besteht, die unter Bildung von zwischen den Oberflächen der Teile angeordneten, beim Eingießen mit Betonmaterial ausgefüllten Dämpfungsfugen (14) miteinander verbunden sind.

2. Einlegeteil nach Anspruch 1, dadurch gekennzeichnet, daß das Einlegeteil aus einem Rost aus einzelnen, die Gewindelöcher (15) für die Befestigung des elastischen Lagerelementes aufweisenden Stäben (12) besteht, zwischen denen in das Betonmaterial (11) ragende Bleche (13) angeordnet sind, wobei die dem Lagerelement zugeordneten Oberflächen der Stäbe und die Stirnkanten der Bleche mit der Oberfläche des Betonfundamentes in einer Ebene (18) liegen.

3. Einlegeteil nach Anspruch 1, dadurch gekennzeichnet, daß das Einlegeteil einzelne Stäbe (12) mit den Gewindebohrungen (15) für die Befestigung des elastischen Lagerelementes aufweist, die quer zu einer Vielzahl von in das Betonmaterial (11) ragenden Blechen (13) angeordnet und formschlüssig mit ihnen verbunden sind, wobei die dem Lagerelement zugeordneten Oberflächen der Stäbe und die Stirnkanten der Bleche mit der Oberfläche des Betonfundamentes in einer Ebene (18) liegen.

4. Einlegeteil nach Anspruch 2 und 3, dadurch gekennzeichnet, daß die Bleche (13) U-förmig ausgebildet sind, wobei die beiden Schenkel (17) in das Betonmaterial (11) hineinragen.

5. Einlegeteil nach Anspruch 1 bis 4, dadurch gekennzeichnet, daß die Stäbe (12) und Bleche (13) durch unterbrochene Schweißnähte (16) und Schweißpunkte unter Bildung von Dämpfungsfugen (14) zwischen den nebeneinanderliegenden Oberflächen zusammengesetzt sind.

6. Einlegeteil nach Anspruch 1 bis 4, dadurch gekennzeichnet, daß die Vielzahl von Stäben (12) und Blechen (13) unter Bildung von Dämpfungsfugen (14) durch Schraubenbolzen (19, 22) zusammengespannt sind.

7. Einlegeteil nach Anspruch 6, dadurch gekennzeichnet, daß die Dämpfungsfugen (14) durch Distanzscheiben (20) gebildet sind.

## Claims

1. A supporting and mounting device for a resilient bearing element of a machine cast in a concrete foundation as an embedded unit, characterised in that the embedded unit comprises a plurality of spaced apart bars (12) and plates (13) which are disposed side by side and are aligned parallel to the surface of the concrete foundation, which are connected to one another to form damping joints (14) which are disposed between the surfaces of the parts and which during casting are filled with concrete material.

2. An embedded unit according to Claim 1, characterised in that the embedded unit comprises a grid of individual bars (12) having threaded holes (15) for securing the resilient bearing element, between which bars there are arranged plates (13) projecting into the concrete material (11), wherein the surfaces of the bars associated with the bearing element and the side edges of the plates lie in one plane (18) with the surface of the concrete foundation.

3. An embedded unit according to Claim 1, characterised in that the embedded unit has individual bars (12) with the threaded holes (15) for securing the resilient bearing element, which bars are disposed transversely to a plurality of plates (13) projecting into the concrete material (11) and are connected in a form-locking manner therewith, wherein the surfaces of the bars associated with the bearing element and the side edges of the plates lie in one plane (18) with the surface of the concrete foundation.

4. An embedded unit according to Claims 2 and 3, characterised in that the plates (13) are U-shaped and the two arms (17) project into the concrete material (11).

5. An embedded unit according to Claims 1 to 4, characterised in that the bars (12) and plates (13) are assembled by means of discontinuous weld seams (16) and spot welds to form the damping joints (14) between the juxtaposed surfaces.

6. An embedded unit according to Claims 1 to 4, characterised in that the plurality of bars (12) and plates (13) are clamped together by threaded bolts (19,22) to form the damping joints (14).

7. An embedded unit according to Claim 6, characterised in that the damping joints (14) are formed by shims (20).

## Revendications

1. Dispositif de support et de fixation incorporé par coulée en tant que pièce insérée dans une fondation en béton, pour former un élément élastique de support de machine, caractérisé en ce que la pièce insérée est constituée d'un grand nombre de barres (12) et de tôles (13) disposées les unes à côté des autres, à distance les unes des autres, orientées parallèlement à la surface de la fondation en béton, lesdites barres et tôles étant reliées entre elles, en formant des intervalles amortisseurs (14) qui sont disposés entre les surfaces des éléments, et qui sont remplis par coulée d'un matériau formateur de béton.

2. Pièce insérée selon la revendication 1, caractérisée en ce que la pièce insérée est constituée d'une grille formée de barres (12) individuelles présentant des trous taraudés (15) destinés à la fixation de l'élément élastique de support, entre lesquelles sont disposées des tôles (13) pénétrant dans le matériau formateur de béton (11), les surfaces de barres associées à l'élément de support et les bords frontaux des tôles étant dans le même plan (18) que la surface supérieure de la fondation en béton.

3. Pièce insérée selon la revendication 1, caractérisée en ce que cette pièce insérée présente des barres (12) individuelles comportant les trous taraudés (15) destinés à la fixation de l'élément élastique de support, barres qui sont disposées transversalement à un grand nombre de tôles (13) pénétrant dans le matériau formateur de béton (11) et qui sont reliées à celles-ci par blocage par complémentarité de forme, les surfaces des barres et les bords frontaux des tôles associées à l'élément de support étant situées dans le même plan (18) que la surface supérieure de la fondation en béton.

4. Pièce insérée selon les revendications 2 et 3, caractérisée en ce que les tôles (13) ont une forme de U dont les deux branches (17) pénètrent dans le matériau formateur de béton (11).

5. Pièce insérée selon les revendications 1 à 4, caractérisée en ce que les barres (12) et les tôles (13) sont assemblées au moyen de cordons de soudure (16) interrompus et de points de soudure, avec formation d'intervalles amortisseurs (14) entre les surfaces situées les unes à côté des autres.

6. Pièce insérée selon les revendications 1 à 4, caractérisée en ce que les nombreuses barres (12) et tôles (13) sont assemblées au moyen de boulons filetés (19, 22), avec formation d'intervalles amortisseurs (14).

7. Pièce insérée selon la revendication 6, caractérisée en ce que les intervalles amortisseurs (14) sont formés au moyen de rondelles (20) de maintien d'écart.
